# EUROPÄISCHE PATENTSCHRIFT

(11) **EP 2 528 787 B1**
(45) Veröffentlichungstag und Bekanntmachung des Hinweises auf die Patenterteilung: **14.12.2016**
(21) Anmeldenummer: 11701992.7
(22) Anmeldetag: 26.01.2011
(51) Int. Cl.: B60T 8/1755, B60T 7/22, B60W 30/08

(54) **NOTBREMSASSISTENT ZUM AUTOMATISCHEN ABBREMSEN EINES FAHRZEUGS ZUR KOLLISIONSVERMEIDUNG ODER KOLLISIONSFOLGENMINDERUNG**
EMERGENCY BRAKE ASSISTANT FOR AUTOMATICALLY DECELERATING A VEHICLE TO PREVENT A COLLISION OR REDUCE THE CONSEQUENCES OF A COLLISION
ASSISTANT DE FREINAGE D'URGENCE POUR LE FREINAGE AUTOMATIQUE D'UN VÉHICULE POUR ÉVITER UNE COLLISION OU RÉDUIRE LES CONSÉQUENCES D'UNE COLLISION

(30) Priorität: 29.01.2010 DE 102010006214
(43) Veröffentlichungstag der Anmeldung: 05.12.2012
(73) Patentinhaber: Bayerische Motoren Werke Aktiengesellschaft, 80809 München (DE)
(72) Erfinder: REINISCH, Philipp, 81549 München (DE); ZAHN, Peter, 82211 Herrsching A. Ammersee (DE)
(86) Internationale Anmeldenummer: PCT/EP2011/051085
(87) Internationale Veröffentlichungsnummer: WO 2011/092216

(56) Entgegenhaltungen:
- WO-A1-03/095278
- WO-A1-2006/097467
- DE-A1-102004 062 496
- DE-A1-102005 003 274
- DE-A1-102005 054 754

## Beschreibung

Die Erfindung bezieht sich auf einen Notbremsassistenten zum automatischen Abbremsen eines Fahrzeugs zur Kollisionsvermeidung oder Kollisionsfolgenminderung nach dem Oberbegriff des Anspruchs 1.

Moderne Fahrerassistenzsysteme sind in der Lage, eine unmittelbar bevorstehende Kollision durch eine autonom initiierte Vollbremsung vollständig zu vermeiden oder zumindest die Kollisionsfolgen zu minimieren. Diese Systeme erfassen mit geeigneter Sensorik (Radar, Lidar, Bildverarbeitung) oder durch Auswertung von Fahrzeug-Fahrzeug-Kommunikation das Fahrzeugumfeld und ermitteln mögliche Kollisionsobjekte. Steht eine Kollision bevor, wird eine Vollverzögerung eingeleitet.

Mit zunehmender Relativgeschwindigkeit zwischen dem Egofahrzeug und dem potentiellen Kollisionspartner steigt der für diese Bremsung notwendige Weg dabei quadratisch an. Da im Vergleich dazu der Abstand für ein knappes Überholmanöver oder Ausweichmanöver nur linear mit der Geschwindigkeit wächst, ist bei höheren Differenzgeschwindigkeiten ein Überholen oder Ausweichen noch möglich, nachdem der Zeitpunkt für eine kollisionsvermeidende Bremsung bereits überschritten wurde. Dieses so genannte Eingriffsdilemma führt zu einem Zielkonflikt bei der Auslegung des Notbremsassistenten. Greift der Assistent bei Erreichen des letztmöglichen Bremszeitpunkts mit einer Vollverzögerung ein, wird die Kollision vermieden - ein Fahrer, der ein knappes Überhol- oder Ausweichmanöver plante, wird durch den Eingriff jedoch überrascht. Um diese subjektiv als fehlerhaft empfundenen Bremsungen zu vermeiden und den Produkthaftungsanforderungen gerecht zu werden, sind die aktuell auf dem Markt befindlichen Systeme so ausgelegt, dass eine Bremsung erst zu dem Zeitpunkt erfolgt, zu dem der Fahrer die Kollision weder durch Bremsen noch durch Überholen oder Ausweichen noch selbständig vermeiden kann ("point of no return"). Bei hohen Differenzgeschwindigkeiten führt dies jedoch dazu, dass auch durch die autonome Notbremsung keine Kollisionsvermeidung mehr möglich ist - lediglich die Kollisionsfolgen werden gemindert.

Ein derartiges System ist bereits aus der DE 10 2004 062 496 A1 bekannt. Hier wird zusätzlich vor dem letztendlichen Bremseingriff zu dem Zeitpunkt, zu dem der Fahrer die Kollision weder durch Bremsen noch durch Überholen oder Ausweichen noch selbständig vermeiden kann, im Vorfeld bei Erreichen eines ersten Schwellwertes eine erste Warnfunktion aktiviert und bei Erreichen eines zweiten Schwellwertes ein Systemeingriff mit einer autonomen Teilbremsung eingeleitet, durch die der Fahrer verstärkt auf die Gefahr hingewiesen werden soll.

Aus der DE 601 26 398 T2 ist bereits ein Bremssteuerungssystem mit Systemeingriff bei Objekterkennung bekannt, welches bei einer erkannten Ausweichabsicht des Fahrers einen ansonsten generierten automatischen Bremseingriff zur Verhinderung einer Kollision mit einem detektierten Kollisionsobjekt unterdrückt.

Ein Notbremsassistent gemäß dem Oberbegriff des unabhängigen Anspruchs 1 ist aus der WO03/095278 A1 bekannt.

Aufgabe der Erfindung ist es, einen Notbremsassistenten anzugeben, der unter Berücksichtigung oben genannter Problematik einen Eingriffszeitpunkt ermitteln kann, sodass der Fahrer sich einerseits ausreichend sicher fühlt und andererseits bei eigenen Fahraktionen nicht behindert wird.

Diese Aufgabe wird durch einen Notbremsassistenten nach Patentanspruch 1 gelöst. Vorteilhafte Weiterbildungen ergeben sich aus den abhängigen Ansprüchen.

Die Erfindung geht von einem Notbremsassistenten zum automatischen Abbremsen eines Fahrzeugs zur Kollisionsvermeidung oder Kollisionsfolgenminderung mit einem detektierten Kollisionsobjekt aus, wobei zu einem ermittelten Eingriffszeitpunkt ein Bremssystem des Fahrzeugs automatisch derart angesteuert wird, dass eine Kollision mit dem detektierten Kollisionsobjekt vermieden oder zumindest die Kollisionsfolgen gemindert werden können.

Im realen Straßenverkehr erlebt der Fahrer ständig Ereignisse, auf die er zur Vermeidung einer Kollision reagieren muss - darunter auch die für eine autonome Notbremsung relevanten Anwendungsfälle:
- Eine kontinuierliche Annäherung an ein Vorderfahrzeug,
- ein plötzliches Bremsmanöver eines Vorderfahrzeugs sowie
- ein in die eigene Spur einscherendes Nachbarfahrzeug.

Obwohl keine Informationen zum subjektiven Fahrerempfinden zur Verfügung stehen, kann mithilfe der Fahrzeugsensorik ein Modell dieser Reaktionsauslöser geschaffen werden. Dazu werden fahrpsychologische Schwellwerte verwendet, die den Übergang von einer als sicher empfundenen Folgefahrt hin zu einer reaktionsbedürftigen Annäherung beschreiben.

Die kontinuierliche Annäherung an ein Fahrzeug innerhalb der Eigentrajektorie, die in vielen Situationen auch mit hoher Relativgeschwindigkeit erfolgt, lässt sich abstandsunabhängig durch die Zeit bis zur Kollision (time to collision (TTC)) beschreiben. Dabei wird im Stand der Technik ein TTC-Wert von 5s als Schwelle angesehen, unterhalb derer der Fahrer einen akuten Handlungsbedarf empfindet, die Lücke zwischen Ego- und Fremdfahrzeug wieder zu vergrößern beziehungsweise dem Hindernis durch ein Überholmanöver auszuweichen.

Dieser Schwellwert lässt sich in einem begrenzten Differenzgeschwindigkeitsbereich auch als Abstandswert angeben. Er setzt sich aus einem konstanten Sicherheitsabstand beim Stillstand sowie einem geschwindigkeitsabhängigen Wert zusammen. Mit diesem minimalen Folgeabstand können nun die verbleibenden Anwendungsfälle "plötzliche Bremsung" und "Einscheren" detektiert werden. Verzögert ein vorausfahrendes Fahrzeug im Folgeverkehr so stark, dass der Fahrer des Egofahrzeugs unter Beibehaltung seines Bewegungszustandes den Sicherheitsabstand unterschreiten würde, ergibt sich ein Handlungsbedarf zur Wiederherstellung des sicheren Fahrzustandes. Dieser Handlungsbedarf ergibt sich ebenfalls, wenn ein Fahrzeug auf der Nachbarspur innerhalb des minimalen Folgeabstandes ein Einschermanöver beginnt.

Beide Ereignisse ließen sich auch durch den zeitlichen Schwellwert TTC erkennen. Der Vorteil der Abstandsbetrachtung zeigt sich aber beispielhaft bei einer plötzlichen Bremsung. Beginnt die Verzögerung des vorausfahrenden Fahrzeugs in einem Fahrzustand, in dem es sich noch vom Egofahrzeug entfernt, ist die Berechnung der TTC noch nicht möglich. Durch die Verwendung des Abstandswerts kann auch in diesen Fällen der Startzeitpunkt für den Beginn der anschließenden Reaktion identifiziert werden.

Die Erfindung zeichnet sich nun dadurch aus, dass der Eingriffszeitpunkt in Abhängigkeit vom Endzeitpunkt einer ermittelten Fahrerreaktionszeit und vom ermittelten letztmöglichen Bremszeitpunkt ermittelbar ist.

Die Reaktionszeit, die nach dem Auftreten des entsprechenden Reaktionsauslösers einsetzt und bis zu dem Zeitpunkt reicht, zu dem die Fahrerreaktion auf dem Fahrzeugbussystem gemessen werden kann, lässt sich mithilfe des so genannten OODA-Wirkkreises modellieren. Dieser repräsentiert die einzelnen Komponenten der menschlichen Entscheidungsfindung: O(bserve, Beobachten), O(rient, Einordnen), D(ecide, Entscheiden) und A(ct, Handeln). Sowohl beim Beobachtungs- als auch beim Handlungsprozess kann man im Durchschnitt aller Fahrer von annähernd konstanten Werten ausgehen. Die Dauer für die reine Wahrnehmung der Situation liegt bei circa 0,2s, die Ausführung der Handlung - also die Fußbewegung bis zur Pedalbetätigung - aufgrund der häufigen Übung bei circa 0,3s.

Im Gegensatz dazu sind die verbleibenden Prozessschritte zum Einordnen sowie zur Entscheidungsbildung abhängig vom auslösenden Ereignis, d. h. die Fahrerreaktionszeit ist in Abhängigkeit von der aktuellen Fahrzeugumgebung und/oder von der Art des Auftretens des Kollisionsobjekts ermittelbar. Unerwartete Auslöser (beispielsweise eine unvorhersehbare starke Bremsung des vorausfahrenden Fahrzeugs) oder Ereignisse mit geringer Eintrittswahrscheinlichkeit führen zu einer längeren Phase der Entscheidungsfindung als erwartete oder häufig auftretende Ereignisse. Zusammen lassen sich diese beiden Prozessschritte als gammaverteilt modellieren.

Um aus der Gammaverteilung eine Reaktionszeit ableiten zu können, wird das Risiko betrachtet, eine bestimmte Dauer zu überschreiten. Dazu wird die kumulierte Gammaverteilung von eins abgezogen. Ein Risiko von 20% bedeutet dementsprechend, dass in der betrachteten Untersuchung 80% der Fahrer weniger oder genau die resultierende Dauer zur Reaktion auf das auslösende Ereignis benötigten.

Zusätzlich zur Abhängigkeit vom auslösenden Ereignis bzw. von der Art des Auftretens des Kollisionsobjekts verlängert sich die aus dem OODA-Wirkkreis resultierende Reaktionszeit, sofern dem Fahrer mehrere Handlungsalternativen zur Verfügung stehen. Da die einzelnen Eintrittswahrscheinlichkeiten der Handlungsalternativen a priori unbekannt sind, werden sie als gleichverteilt angenommen.

Für den Anwendungsfall der aktiven Gefahrenbremsung bedeutet dies, dass neben der Möglichkeit des Bremsens auch die Durchführbarkeit eines Überholmanövers überprüft werden muss. Dazu wird bspw. der Bereich neben dem Fahrzeug in jeweils drei Teilbereiche aufgeteilt: hinter dem Egofahrzeug, seitlich auf Höhe des Egofahrzeugs sowie vor dem Egofahrzeug. Für alle Bereiche wird ein Spurwechsel-relevanter Wert berechnet und in einer Vergleichsfunktion auf einen Faktor zwischen 0 (Spurwechsel nicht durchführbar) und 1 (Spurwechsel sicher durchführbar) normiert. Das Minimum der drei Faktoren bestimmt die globale Spurwechseldurchführbarkeit. Wird ein definierter Schwellwert für das Minimum überschritten, wird von der Realisierbarkeit eines Spurwechsels in die entsprechende Richtung ausgegangen.

Im Heckbereich wird die notwendige Verzögerung für ein sich annäherndes Fahrzeug im Falle eines Spurwechsels des Egofahrzeugs als Spurwechselrelevanter Wert berechnet. Im Frontbereich wird die notwendige Verzögerung für das Egofahrzeug analysiert, sollte es einen Spurwechsel durchführen und die Zielspur bereits durch ein Fremdfahrzeug belegt sein. Im Seitenbereich wird der zur Durchführung des Spurwechsels benötigte Platz ausgewertet. Die Spurwechseldurchführbarkeit ergibt sich dann aus dem Verhältnis zwischen der notwendigen und der zumutbaren Verzögerung (Heck- und Frontbereich) beziehungsweise zwischen dem benötigten und dem zur Verfügung stehenden Platz im Seitenbereich.

Da insbesondere unter der Voraussetzung, dass bei einem detektierten Kollisionsobjekt der Fahrer ggf. noch überholen oder ausweichen kann, der letztmögliche Ausweichzeitpunkt bei der Ermittlung des Eingriffszeitpunkts berücksichtigt werden muss, wird in einer vorteilhaften Ausgestaltung der Erfindung bei der Ermittlung des Eingriffszeitpunkts auch dieser letztmögliche Ausweichzeitpunkt berücksichtigt.

Zur Ermittlung des letztmöglichen Ausweichzeitpunkts bzw. des notwendigen Abstands für ein knappes Überholmanöver wird bspw. eine Überholparabel mit einer angenommenen Querbeschleunigung in den freien Bereich zwischen Egofahrzeug und dem potentiellen Kollisionsobjekt gelegt. Der für das Überhol- oder Ausweichmanöver notwendige Abstand in Längsrichtung ergibt sich dann in Abhängigkeit der momentanen Relativgeschwindigkeit sowie des zu überwindenden lateralen Abstands. Dieser besteht aus den Objektbreiten von Ego- und Fremdfahrzeug sowie der aktuellen Objektposition. Da bei geringen Geschwindigkeiten nicht von einer maximalen Querbeschleunigung ausgegangen werden kann, wird die Querbeschleunigung geschwindigkeitsabhängig adaptiert.

Unter Berücksichtigung des Endzeitpunkts der ermittelten Fahrerreaktion, einem (auf bekannte Weise) ermittelten letztmöglichen Bremszeitpunkt und dem ermittelten letztmöglichen Ausweichzeitpunkt lässt sich die Situation zum Ende der Reaktionszeit bewerten und somit zumindest ein vorläufiger Eingriffszeitpunkt für einen autonomen Bremseingriff ermitteln. Dazu wird - wie bereits oben dargestellt wurde - zunächst den drei möglichen Reaktionsauslösern die entsprechende Reaktionszeit zugeordnet. Eine kontinuierliche Annäherung an ein Vorderfahrzeug wird dabei als erwartetes, eine plötzliche Bremsung beziehungsweise ein einscherendes Fahrzeug als unerwartetes Ereignis gewertet. Zieht man zum Zeitpunkt des Eintretens des Reaktionsbedarfs die entsprechende Reaktionsdauer von der Zeit bis zur Kollision (TTC) ab, lässt sich der ermittelte Wert - also die zur Kollisionsvermeidung verbleibende Zeit nach der Reaktion - mit den Schwellwerten für eine Bremsung beziehungsweise ein Überhol- oder Ausweichmanöver vergleichen.

Im Falle von niedrigen Differenzgeschwindigkeiten (d. h. hier liegt der letztmögliche Ausweichzeitpunkt zeitlich gesehen vor dem letztmöglichen Bremszeitpunkt) kann stets der letztmögliche Bremszeitpunkt als Eingriffszeitpunkt verwendet werden, da dem Fahrer keine andere Alternative zur Kollisionsvermeidung bleibt.

Im Falle von hohen Differenzgeschwindigkeiten, bei denen ein Überholen oder Ausweichen noch nach Erreichen des letztmöglichen Bremszeitpunkts möglich ist, ergeben sich jedoch drei mögliche Situationen.

Für den Fall, dass der ermittelte Endzeitpunkt der Fahrerreaktionszeit zeitlich gesehen vor dem ermittelten letztmöglichen Bremszeitpunkt liegt, kann als vorläufiger Eingriffszeitpunkt demzufolge der letztmögliche Bremszeitpunkt gewählt werden, da im Falle einer selbständigen Kollisionsvermeidung durch den Fahrer eine entsprechende Reaktion bereits vorher vorliegt. Für diesen Fall ist die Unfallvermeidung also stets möglich.

Beim zweiten Fall wird davon ausgegangen, dass der ermittelte Endzeitpunkt der Fahrerreaktionszeit vor dem ermittelten letztmöglichen Ausweichzeitpunkt und nach dem ermittelten letztmöglichen Bremszeitpunkt eintritt. Da die Wahrscheinlichkeit einer selbständigen Beherrschung der Situation durch den Fahrer sehr viel höher ist als die einer Heckkollision, wird ein Bremseingriff ggf. (d. h. wenn notwendig) erst zum Ende der Reaktionszeit initiiert. Im ungünstigsten Fall kann dies jedoch bedeuten, dass die Notbremsung nicht mehr zur vollständigen Kollisionsvermeidung ausreicht. Um diesen Konflikt teilweise aufzulösen, wird der normierte Wert zur Beurteilung der Spurwechselmöglichkeit aus der Reaktionszeitabschätzung herangezogen, d. h. der vorläufige Eingriffszeitpunkt wird in diesem Fall in Abhängigkeit von der Durchführbarkeit eines Ausweichmanövers festgelegt. Dabei wird als vorläufiger Eingriffszeitpunkt der letztmögliche Bremszeitpunkt festgelegt, wenn ein Ausweichmanöver nicht durchführbar ist, und nur dann der Endpunkt der Fahrerreaktionszeit, wenn ein Ausweichmanöver sicher durchführbar ist. Ist kein Spurwechsel möglich, erfolgt also eine vollständig kollisionsvermeidende Bremsung.

Im dritten Fall wird davon ausgegangen, dass der ermittelte Endzeitpunkt der Fahrerreaktionszeit nach dem ermittelten letztmöglichen Bremszeitpunkt und nach dem ermittelten letztmöglichen Ausweichzeitpunkt liegt, wobei der ermittelte letztmögliche Ausweichzeitpunkt nach dem ermittelten letztmöglichen Bremszeitpunkt eintritt. In diesem Fall kann der automatische Bremseingriff bereits zum letztmöglichen Bremszeitpunkt vorgenommen werden, da eine rechtzeitige Reaktion des Fahrers sehr unwahrscheinlich ist.

Für eine noch bessere Festlegung des Eingriffszeitpunkts des Notbremsassistenten ist neben den oben genannten Parameter auch wichtig, die tatsächliche Fahrerreaktion zu überprüfen und zu berücksichtigen. Insbesondere sollte dabei die eintretende Fahrerreaktion (z. B. Bremsen oder Überholen) während und/oder nach der ermittelten Fahrerreaktionszeit berücksichtigt werden. Liegt eine Reaktion vor (oder wird sie zumindest vermutet) und ist sie zur selbständigen Kollisionsvermeidung ausreichend bzw. ist das Ausweich- oder Überholmanöver durchführbar, wird der in der Fallunterscheidung ermittelte vorläufige Eingriffszeitpunkt bis zum sog. "point of no return", also dem ermittelten letztmöglichen Ausweichzeitpunkt hinausgezögert. Obwohl dieser aufgrund der als adäquat erkannten Fahrerreaktion nie erreicht werden sollte, kann er dennoch als Rückfallebene aufrecht erhalten bleiben. Andernfalls wird als Eingriffszeitpunkt der ermittelte vorläufige Eingriffszeitpunkt festgelegt.

Für die beiden Handlungsoptionen "Bremsen" und "Überholen" können jeweils Indikatoren ermittelt werden. Eine Bremswirkung kann sowohl durch das originäre Betätigen des Bremspedals als auch durch den Aufbau von Schleppmoment durch Loslassen des Gaspedals aufgebracht werden. Die Überholreaktion kann durch Erkennen einer abnehmenden Überlappung zum Frontfahrzeug beziehungsweise durch einen entsprechenden Lenkwinkelverlauf detektiert werden. Um den Überholwunsch frühzeitig miteinbeziehen zu können, liegt die Verwendung von Spurwechselmotivationsmodellen nahe. Ein vereinfachter Ansatz dafür stellt die Erkennung der Blinkerbetätigung zum Spurwechsel dar.

Zur Überprüfung, ob die erkannte Reaktion auch rechtzeitig und adäquat vorliegt, wird im Falle der Bremsung die aufgebrachte Verzögerung mit der zur Vermeidung der Kollision notwendigen Verzögerung verglichen. Diese ist abhängig von der momentanen Relativgeschwindigkeit zwischen Egofahrzeug und Kollisionsobjekt, dem momentanen Abstand zwischen den beiden Fahrzeugen sowie der Verzögerung des Fremdfahrzeugs.

Im Falle einer vorliegenden Überholintention beziehungsweise -reaktion muss - wie bereits oben erwähnt - auch überprüft werden, ob der Spurwechsel bzw. das Ausweichmanöver durchführbar ist. Dazu kann auf die im Rahmen der Reaktionszeitabschätzung berechnete Beurteilung der Spurwechselmöglichkeit zurückgegriffen werden.

Die Erfindung wird nun anhand eines Ausführungsbeispiels näher erläutert. Dabei zeigt
Fig. 1 einen stark vereinfachten Aufbau des erfindungsgemäßen Notbremsassistenten, und
Fig. 2 ein Ablaufdiagramm zur Ermittlung eines Eingriffszeitpunkts im Rahmen eines Notbremsassistenten.

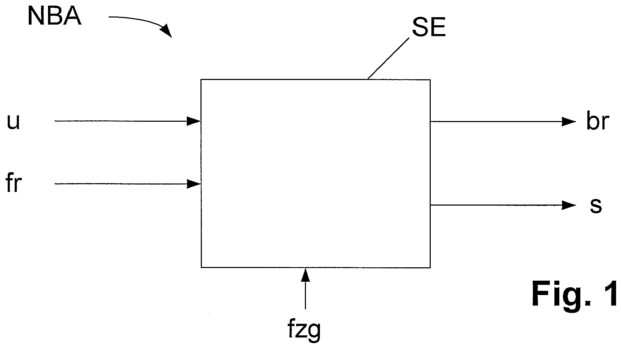

Die Fig. 1 zeigt einen Notbremsassistenten NBA zum automatischen Abbremsen eines Fahrzeugs zur Kollisionsvermeidung oder Kollisionsfolgenminderung mit einem detektierten Kollisionsobjekt mittels einer Steuereinheit SE, die verschiedene Daten u, fr und fzg empfängt und in Abhängigkeit dieser Daten ein Signal br zum Aktivieren einer hier nicht dargestellten Bremseinheit sowie ggf. ein Signal s zum Erzeugen einer optischen, akustischen oder haptischen Warnung aussendet. Bei den Daten u handelt es sich um Umgebungsdaten, die Aufschluss über Objekte und Informationen über die Straßenart (z.B. mehrspurig) geben können. Um ein Kollisionsobjekt, einen letztmöglichen Ausweichzeitpunkt und/oder einen letztmöglichen Bremseingriffszeitpunkt zur Kollisionsvermeidung ermitteln zu können, werden zusätzlich noch weitere Fahrzeugdaten fzg wie z. B. die aktuelle Geschwindigkeit des Fahrzeugs, die Relativgeschwindigkeit und/oder den Abstand zu einem detektierten Objekt ausgewertet.

Schließlich geben die Fahrerreaktionsdaten fr noch Aufschluss über Handlungen des Fahrers, insbesondere dahingehend, ob der Fahrer auf ein detektiertes Kollisionsobjekt entsprechend reagiert, um die Kollision zu vermeiden. In Abhängigkeit dieser Eingangsdaten wird dann ein Eingriffszeitpunkt für ein Bremssystem des Fahrzeugs zum Abbremsen des Fahrzeugs ermittelt. Zum ermittelten Eingriffszeitpunkt wird ein Signal br zum Aktivieren des Bremssystems ausgesendet. Zusätzlich kann ab Detektieren des Kollisionsobjekts noch ein Hinweissignal s zum Aktivieren einer akustischen, optischen oder haptischen Warnung ausgelöst werden.

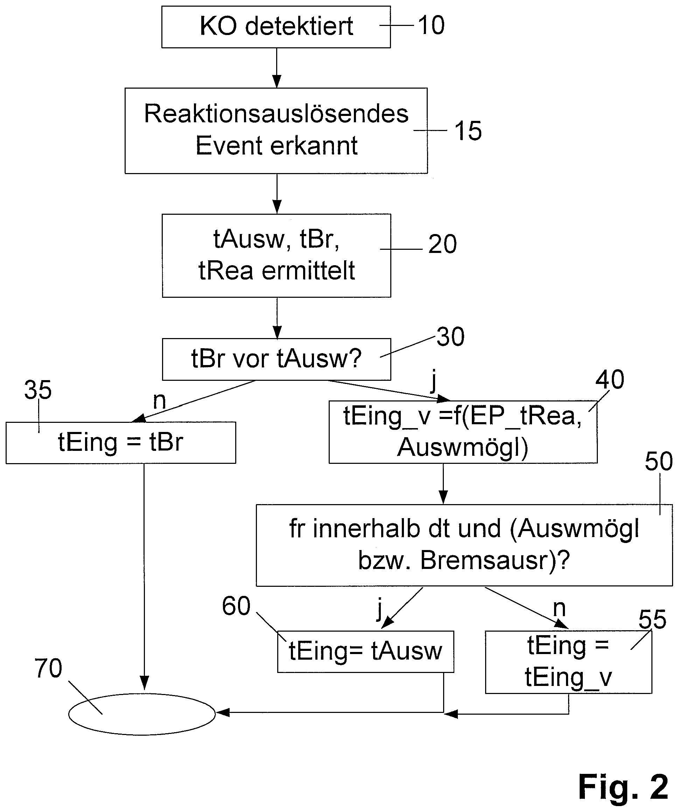

Anhand des in der Fig. 2 dargestellten Ablaufdiagramms wird nun näher auf die Vorgehensweise zur Ermittlung des Eingriffszeitpunkts im Rahmen des Notbremsassistenten eingegangen.

Der Ermittlungsvorgang startet im Schritt 10 sobald ein Kollisionsobjekt detektiert wurde. Im nächsten Schritt 15 werden aus den Bewegungen des eigenen Fahrzeugs sowie des erkannten Kollisionsobjekts Events identifiziert, auf die der Fahrer zu selbständigen Kollisionsvermeidung reagieren muss. In Schritt 20 werden daraufhin die letztmöglichen Zeitpunkte für eine Bremsung tBr und einen Ausweichvorgang bzw. ein knappes Überholmanöver tAusw ermittelt. Ersterer lässt sich durch Modellierung einer Systembremsung einfach bestimmen. Er gibt den Zeitpunkt an, an dem mit einer Vollverzögerung spätestens gebremst werden muss, um die Kollision noch zu verhindern. Für die Ermittlung des letztmöglichen Zeitpunkts für ein Ausweich- oder Überholmanöver existieren mehrere Ansätze. Beispielhaft kann - wie oben bereits erläutert - eine Parabel als Trajektorie angenommen werden. Auch die Annahme einer Kreisbahn oder eine empirische Ermittlung sind möglich.

Parallel wird unter Zugrundelegung der momentanen Fahrumgebung und in Abhängigkeit des vorliegenden Events (kontinuierliche Annäherung an das vorausfahrende Kollisionsobjekt oder abrupte Bremsung desjenigen oder Einscheren des Kollisionsobjekts in die eigene Fahrtrajektorie) eine maximale Reaktionszeit tRea abgeschätzt, die für einen Großteil der Fahrer Gültigkeit besitzt. Sie ist umso länger, je unerwarteter das Ereignis eintritt. Eine kontinuierliche Annäherung an das Vorderfahrzeug bedingt also eine kürzere Reaktionszeit tRea als eine plötzliche Bremsung. Empirische Versuche zeigen, dass die Reaktionszeit tRea als Gammaverteilung modelliert werden kann. Für die unterschiedlichen Reaktionsursachen existieren individuelle Parameter, die die Form der Verteilung anpassen. Bei Verwendung dieser Gammaverteilung kann somit der Prozentwert vorgegeben werden, der den Anteil der abgedeckten Fahrer angibt. Bei einer Vorgabe von 80% existieren also nur noch 20% Fahrer, deren Reaktionszeit tRea in den Versuchen noch länger als der resultierende Wert ist.

Zusätzlich wird die Reaktionszeit tRea durch die Anzahl der möglichen Handlungsalternativen verlängert. Kann der Fahrer also zwischen Bremsen und Überholen entscheiden (er hat also 2 Alternativen), erhöht sich seine Reaktionszeit tRea logarithmisch nach dem Hick'schen Gesetz. Aus Systemsicht bedeutet dies, dass die Möglichkeit, ein Überhol- oder Ausweichmanöver durchzuführen, überprüft werden muss. Dazu wird in einem dreistufigen Verfahren der Abstand sowie die Relativgeschwindigkeit zum Vorderfahrzeug auf der Nachbarspur, der freie Abstand neben dem eigenen Fahrzeug sowie die Relativgeschwindigkeit und der Abstand eines sich von hinten auf der Nachbarspur annähernden Fahrzeugs analysiert. Deuten alle drei Überprüfungen nicht auf eine Gefahr auf der Nachbarspur hin, besteht die Möglichkeit eines Spurwechsels - die Reaktionszeit tRea verlängert sich. Mit dem Eintreten eines Ereignisses beginnt die modellierte Reaktionszeit tRea zu laufen.

Aus der modellierten Reaktionszeit tRea und der aktuellen Situation wird während der nächsten Schritte ein vorläufiger Eingriffszeitpunkt tEing_v (unter gewissen Voraussetzungen auch bereits der endgültige Eingriffszeitpunkt tEing) ermittelt. Dazu wird im Vorfeld im Schritt 30 überprüft, ob der letztmögliche Bremszeitpunkt tBr zeitlich gesehen bereits vor dem letztmöglichen Ausweichzeitpunkt tAusw eintritt. Ist dies nicht der Fall, wird im Schritt 35 als endgültiger Eingriffszeitpunkt tEing der letztmögliche Bremszeitpunkt tBr festgelegt. Das Verfahren wird dann unmittelbar beendet.

Tritt der letztmögliche Bremszeitpunkt tBr jedoch bereits vor dem letztmöglichen Ausweichzeitpunkt tAusw ein, dann wird im nächsten Schritt 40 ein vorläufiger Eingriffszeitpunkt tEing_v ermittelt. Die Fahrerreaktion spielt dabei zunächst keine Rolle. Lediglich das Ende der Reaktionszeit tRea - also die aktuelle TTC (Time-to-collision) minus die (verbleibende) Reaktionszeit - wird analysiert. Daraus resultieren drei unterschiedliche Fälle:
Fall 1: Die Reaktionszeit tRea endet vor dem letztmöglichen Bremszeitpunkt tBr. Hier soll der Eingriff zum letztmöglichen Bremszeitpunkt tBr erfolgen.
Fall 2: Die Reaktionszeit tRea endet zwischen dem letztmöglichen Bremszeitpunkt tBr und dem letztmöglichen Ausweich- bzw. Überholzeitpunkt tAusw. Hier soll der Eingriff zum letztmöglichen Bremszeitpunkt tBr erfolgen, sofern ein Spurwechsel nicht möglich ist, und zum Ende der Reaktionszeit tRea, sofern ein Spurwechsel möglich ist.
Fall 3: Die Reaktionszeit tRea endet nach dem letztmöglichen Überholzeitpunkt tAusw. In diesem Fall kann der Fahrer nicht mehr eigenständig auf die drohende Kollision reagieren. Der Eingriff erfolgt zum letztmöglichen Bremszeitpunkt tBr. Sofern dieser bereits überschritten wurde, erfolgt der Eingriff sofort.

Im darauffolgenden Schritt 50 wird die Reaktion fr des Fahrers innerhalb eines vorgegebenen Zeitraums dt (während und nach dem Ende der Reaktionszeit tRea) auf das Ereignis ausgewertet. Als Reaktionen fr werden ein Überholmanöver sowie eine Bremsung unterschieden. Für ein Überholmanöver kann eine abnehmende Überdeckung des eigenen Fahrzeugs mit dem vorausfahrenden Fahrzeug oder eine starke Beschleunigung sprechen. Die Betätigung des Bremspedals oder ein "Vom-Gas-Gehen" sprechen für eine Bremsung.

Die Reaktion fr allein reicht jedoch nicht aus, um den im vorangegangenen Schritt ermittelten vorläufigen Eingriffszeitpunkt tEing_v zu verändern. Dazu ist zusätzlich die Überprüfung notwendig, ob das Ausweich- bzw. Überholmanöver tatsächlich durchführbar ist bzw. ob die aufgebrachte Verzögerung tatsächlich ausreichend ist, um die Kollision zu vermeiden. Ist dies der Fall (Schritt 60), wird angenommen, dass der Fahrer die Situation selbständig entschärft. Der endgültige Eingriffszeitpunkt tEing wird daher zum letztmöglichen Ausweichzeitpunkt tAusw verschoben. Hier ist die Kollision zwar nicht mehr vermeidbar- aufgrund der erkannten adäquaten Reaktion sollte dieser Zeitpunkt aber nie erreicht werden. Im Falle einer Reaktionsfalscherkennung wirkt die Vollverzögerung noch kollisionsfolgenmindernd. Ist die Reaktion fr nicht durchführbar/ausreichend oder ist keine Reaktion fr erkennbar (Schritt 55), wird der vorläufige Eingriffszeitpunkt tEing_v zum endgültigen Eingriffszeitpunkt tEing. Das Verfahren endet im Schritt 70.

Durch die Einbeziehung der Fahrerreaktion in die Ermittlung des Eingriffszeitpunkts für ein Gefahrenbremssystem kann die Anzahl von Falschauslösungen im Falle hoher Relativgeschwindigkeiten drastisch reduziert werden. Zeigt der Fahrer keine oder eine nicht adäquate Reaktion, wird die Kollision durch das Gefahrenbremssystem vermieden. Reagiert der Fahrer hingegen ausreichend auf das Ereignis, erfolgt ein Eingriff erst zu einem Zeitpunkt, zu dem auch nicht mehr überholt oder ausgewichen werden kann.

## Patentansprüche

1. Notbremsassistent zum automatischen Abbremsen eines Fahrzeugs zur Kollisionsvermeidung oder Kollisionsfolgenminderung mit einem detektierten Kollisionsobjekt, wobei zu einem ermittelten Eingriffszeitpunkt ein Bremssystem des Fahrzeugs automatisch derart angesteuert wird, dass eine Kollision mit dem detektierten Kollisionsobjekt vermieden oder zumindest die Kollisionsfolgen gemindert werden können, wobei der Eingriffszeitpunkt (tEing) in Abhängigkeit vom Endzeitpunkt einer ermittelten Fahrerreaktionszeit (tRea) und vom ermittelten letztmöglichen Bremszeitpunkt (tBr) und unter Berücksichtigung eines ermittelten letztmöglichen Ausweichzeitpunkts (tAusw) ermittelbar ist, **dadurch gekennzeichnet, dass** unter der Voraussetzung, dass der letztmögliche Bremszeitpunkt (tBr) bereits vor dem letztmöglichen Ausweichzeitpunkt (tAusw) eintritt, ein vorläufiger Eingriffszeitpunkt (tEing_v) ermittelt wird.

2. Notbremsassistent nach Anspruch 1, **dadurch gekennzeichnet, dass** der vorläufige Eingriffszeitpunkt (tEing_v) unter Berücksichtigung des Endzeitpunkts der ermittelten Fahrerreaktionszeit (tRea) ermittelt wird.

3. Notbremsassistent nach einem der vorangegangenen Ansprüche, **dadurch gekennzeichnet, dass** der Eingriffszeitpunkt (tEing) derart ermittelbar ist, dass bei einem ermittelten Endzeitpunkt der Fahrerreaktionszeit (tRea), der vor dem ermittelten letztmöglichen Bremszeitpunkt (tBr) eintritt, als vorläufiger Eingriffszeitpunkt (tEing_v) der letztmögliche Bremszeitpunkt (tBr) festgelegt wird und/oder dass bei einem ermittelten Endzeitpunkt der Fahrerreaktionszeit (tRea), der vor dem ermittelten letztmöglichen Ausweichzeitpunkt (tAusw) und nach dem ermittelten letztmöglichen Bremszeitpunkt (tBr) eintritt, als vorläufiger Eingriffszeitpunkt (tEing_v) der letztmögliche Bremszeitpunkt (tBr) oder der Endzeitpunkt der Fahrerreaktionszeit (tRea) festgelegt wird und/oder dass bei einem ermittelten letztmöglichen Ausweichzeitpunkt (tAusw), der nach dem ermittelten letztmöglichen Bremszeitpunkt (tBr) und vor dem ermittelten Endzeitpunkt der Fahrerreaktionszeit (tRea) eintritt, als vorläufiger Eingriffszeitpunkt (tEing_v) der letztmögliche Bremszeitpunkt (tBr) festgelegt wird.

4. Notbremsassistent nach Anspruch 3, **dadurch gekennzeichnet, dass** bei einem ermittelten Endzeitpunkt der Fahrerreaktionszeit (tRea), der vor dem ermittelten letztmöglichen Ausweichzeitpunkt (tAusw) und nach dem ermittelten letztmöglichen Bremszeitpunkt (tBr) eintritt, als vorläufiger Eingriffszeitpunkt (tEing_v) der letztmögliche Bremszeitpunkt (tBr) festgelegt wird, wenn ein Ausweichmanöver nicht durchführbar ist, und/oder als vorläufiger Eingriffszeitpunkt (tEing_v) der Endzeitpunkt der Fahrerreaktionszeit (tRea) festgelegt wird, wenn ein Ausweichmanöver durchführbar ist.

5. Notbremsassistent nach einem der vorangegangenen Ansprüche, **dadurch gekennzeichnet, dass** bei der Ermittlung des Eingriffszeitpunkts (tEing) zusätzlich die Fahrerreaktion (fr) während eines vorgegebenen Zeitraums (dt), insbesondere während der ermittelten Fahrerreaktionszeit (tRea) und/oder nach Endzeitpunkt der ermittelten Fahrerreaktionszeit (tRea) berücksichtigbar ist.

6. Notbremsassistent nach einem der vorangegangenen Ansprüche, **dadurch gekennzeichnet, dass** der Eingriffszeitpunkt (tEing) derart ermittelbar ist, dass bei Erkennen oder Vermuten eines vom Fahrer vorzunehmenden Ausweichvorgangs und einer erkannten Durchführbarkeit des Ausweichmanövers als Eingriffszeitpunkt (tEing) der ermittelte letztmögliche Ausweichzeitpunkt (tAusw) festgelegt wird.

7. Notbremsassistent nach einem der vorangegangenen Ansprüche, **dadurch gekennzeichnet, dass** der Eingriffszeitpunkt (tEing) derart ermittelbar ist, dass bei Nicht-Erkennen oder Nicht-Vermuten eines vom Fahrer vorzunehmenden Ausweichvorgangs als Eingriffszeitpunkt (tEing) der ermittelte vorläufige Eingriffszeitpunkt (tEing_v) festgelegt wird.

8. Notbremsassistent nach einem der vorangegangenen Ansprüche, **dadurch gekennzeichnet, dass** die Fahrerreaktionszeit (tRea) in Abhängigkeit vom Auftreten des Kollisionsobjekts und/oder der Anzahl der möglichen Handlungsalternativen bei einem detektierten Kollisionsobjekt ermittelbar ist.

## Claims

1. An emergency brake assistant for automatically braking a vehicle to prevent a collision or to reduce the consequences of a collision with a detected collision object, wherein at an established intervention point in time, a brake system of the vehicle is automatically activated such that a collision with the detected collision object can be prevented or at least the consequences of the collision can be reduced, wherein the intervention point in time (tEing) can be determined subject to the end point in time of a determined driver reaction time (tRea) and to the determined last possible braking point in time (tBr) and while bearing in mind a determined last possible swerve point in time (tAusw), **characterised in that** provided that the last possible braking point in time (tBr) occurs before the last possible swerve point in time (tAusw), a preliminary intervention point in time (tEing_v) is determined.

2. An emergency brake assistant according to claim 1, **characterised in that** the preliminary intervention point in time (tEing_v) is determined while bearing in mind the end point in time of the determined driver reaction time (tRea).

3. An emergency brake assistant according to either of the preceding claims, **characterised in that** the intervention point in time (tEing) can be determined such that at a determined end point in time of the driver reaction time (tRea) which occurs before the determined last possible braking point in time (tBr), the last possible braking point in time (tBr) is established as the preliminary intervention point in time (tEing_v), and/or **in that** at a determined end point in time of the driver reaction time (tRea) which occurs before the determined last possible swerve point in time (tAusw) and after the determined last possible braking point in time (tBr), the last possible braking point in time (tBr) or the end point in time of the driver reaction time (tRea) is established as the preliminary intervention point in time (tEing_v), and/or **in that** at a determined last possible swerve point in time (tAusw) which occurs after the determined last possible braking point in time (tBr) and before the determined end point in time of the driver reaction time (tRea), the last possible braking point in time (tBr) is established as the preliminary intervention point in time (tEing_v).

4. An emergency brake assistant according to claim 3, **characterised in that** at a determined end point in time of the driver reaction time (tRea) which occurs before the determined last possible swerve point in time (tAusw) and after the determined last possible braking point in time (tBr), the last possible braking point in time (tBr) is established as the preliminary intervention point in time (tEing_v) if a swerve manoeuvre cannot be performed, and/or the end point in time of the driver reaction time (tRea) is established as the preliminary intervention point in time (tEing_v) if a swerve manoeuvre can be performed.

5. An emergency brake assistant according to any one of the preceding claims, **characterised in that** during the determination of the intervention point in time (tEing), it is also possible to consider the driver reaction (fr) during a predetermined period of time (dt), more especially during the determined driver reaction time (tRea) and/or after the end point in time of the determined driver reaction time (tRea).

6. An emergency brake assistant according to any one of the preceding claims, **characterised in that** the intervention point in time (tEing) can be determined such that upon detecting or assuming a swerve manoeuvre which is to be performed by the driver and a detected ability to perform the swerve manoeuvre, the determined last possible swerve point in time (tAusw) is established as the intervention point in time (tEing).

7. An emergency brake assistant according to any one of the preceding claims, **characterised in that** the intervention point in time (tEing) can be determined such that if a swerve manoeuvre to be performed by the driver is not detected or is not assumed, the determined preliminary intervention point in time (tEing_v) is established as the intervention point in time (tEing).

8. An emergency brake assistant according to any one of the preceding claims, **characterised in that** the driver reaction time (tRea) can be determined subject to the appearance of the collision object and/or subject to the number of possible action alternatives when a collision object is detected.

## Revendications

1. Système d'assistance au freinage d'urgence destiné à permettre de freiner automatiquement un véhicule pour éviter une collision ou réduire les conséquences d'une collision avec un objet de collision détecté, selon lequel, à un instant d'action déterminé, on commande automatiquement le système de freinage du véhicule de sorte qu'une collision avec l'objet de collision détecté puisse être évitée ou qu'au moins les conséquences de la collision puissent être réduites, l'instant d'action (tEing) pouvant être déterminé en fonction de l'instant final du temps de réaction du conducteur (tRea) déterminé, et du dernier instant de freinage possible (tBr) déterminé, et en prenant en considération le dernier instant d'évitement possible (tAusw) détecté,
**caractérisé en ce qu'**
un instant d'action provisoire (tEing_v) est déterminé en supposant que le dernier instant de freinage possible (tBr) se présente déjà avant le dernier instant d'évitement possible (tAusw).

2. Système d'assistance au freinage d'urgence conforme à la revendication 1,
**caractérisé en ce que**
l'instant d'action provisoire (tEing_v) est déterminé en prenant en considération l'instant final du temps de réaction du conducteur (tRea) détecté.

3. Système d'assistance au freinage d'urgence conforme à l'une des revendications précédentes,
**caractérisé en ce que**
l'instant d'action (tEing) peut être déterminé de la façon suivante : lorsque l'instant final du temps de réaction (tRea) du conducteur déterminé, se présente avant le dernier instant de freinage possible (tBr) déterminé, on fixe en tant qu'instant d'action provisoire (tEing_v) le dernier instant de freinage possible (tBr), et/ou, lorsque l'instant final du temps de réaction (tRea) du conducteur déterminé, se présente avant le dernier instant d'évitement possible (tAusw) déterminé et après le dernier instant de freinage possible (tBr) déterminé, on fixe en tant qu'instant d'action provisoire (tEing_v) le dernier instant de freinage possible (tBr) ou l'instant final du temps de réaction du conducteur (tRea), et/ou lorsque le dernier instant d'évitement possible (tAusw) déterminé se présente après le dernier instant de freinage possible (tBr) déterminé et avant l'instant final du temps de réaction du conducteur (tRea) déterminé, on fixe en tant qu'instant d'action provisoire (tEing_v) le dernier instant de freinage possible (tBr).

4. Système d'assistance au freinage d'urgence conforme à la revendication 3,
**caractérisé en ce que**
lorsque l'instant final du temps de réaction du conducteur (tRea) déterminé se présente avant le dernier instant d'évitement possible (tAusw) déterminé et après le dernier instant de freinage possible (tBr) déterminé, on fixe en tant qu'instant d'action provisoire (tEing_v) le dernier instant de freinage possible (tBr) si une manoeuvre d'évitement ne peut pas être effectuée, et/ou on fixe en tant qu'instant d'action provisoire (tEing_v) l'instant final du temps de réaction du conducteur (tRea) si une manoeuvre d'évitement peut être effectuée.

5. Système d'assistance au freinage d'urgence conforme à l'une des revendications précédentes,
**caractérisé en ce que**
pour déterminer le point d'action (tEing) on peut en outre prendre en considération la réaction du conducteur (fr) pendant un laps de temps prédéfini (dt), en particulier pendant le temps de réaction du conducteur (tRea) déterminé, et/ou après l'instant final du temps de réaction du conducteur (tRea) déterminé.

6. Système d'assistance au freinage d'urgence conforme à l'une des revendications précédentes,
**caractérisé en ce que**
l'instant d'action (tEing) peut être déterminé de la façon suivante : lorsqu'il est reconnu ou supposé qu'un processus d'évitement va être entrepris par le conducteur et que la possibilité de mettre en oeuvre la manoeuvre d'évitement est reconnue, on fixe le dernier instant d'évitement possible (tAusw) déterminé est fixé en tant qu'instant d'action (tEing).

7. Système d'assistance au freinage d'urgence conforme à l'une des revendications précédentes,
**caractérisé en ce que**
l'instant d'action (tEing) peut être déterminé de la façon suivante : lorsqu'il n'est ni reconnu ni supposé qu'un processus d'évitement va être entrepris par le conducteur, le point d'action provisoire (tEing_v) déterminé est fixé en tant qu'instant d'action (tEing).

8. Système d'assistance au freinage d'urgence conforme à l'une des revendications précédentes,
**caractérisé en ce que**
le temps de réaction (tRea) du conducteur peut être déterminé en fonction de l'arrivée d'un objet de collision et/ou du nombre d'alternatives d'actes possible lorsqu'un objet de collision a été déterminé.
